# EUROPEAN PATENT APPLICATION

(11) **EP 4 779 412 A1**
(43) Date of publication of application: **22.07.2026**
(21) Application number: 25195282.6
(22) Date of filing: 12.08.2025
(51) Int. Cl.: G03G 15/16

(54) **IMAGE FORMING APPARATUS**

(30) Priority: 15.01.2025 JP 2025005622
(71) Applicant: FUJIFILM Business Innovation Corp., Minato-ku Tokyo (JP)
(72) Inventor: KAWAMOTO, Yuka, Ebina-shi, Kanagawa (JP); YAMADA, Yoshiteru, Ebina-shi, Kanagawa (JP); KOMURA, Misaki, Ebina-shi, Kanagawa (JP); TANO, Daisuke, Ebina-shi, Kanagawa (JP)
(74) Representative: Becker Kurig & Partner Patentanwälte mbB

(57) **Abstract**

An image forming apparatus includes a photoreceptor (1), a charging device (2) that charges a surface of the photoreceptor, an electrostatic charge image forming device (3) that forms an electrostatic charge image on a charged surface of the photoreceptor, a developing device (4) that develops the electrostatic charge image formed on the surface of the photoreceptor with a developer containing a toner to form a toner image, an intermediate transfer member (20, 50) to which the toner image formed on the surface of the photoreceptor is transferred, a primary transfer device (5) that transfers the toner image formed on the surface of the photoreceptor to a surface of the intermediate transfer member, a secondary transfer device (26) that transfers the toner image transferred to the surface of the intermediate transfer member to a surface of a recording medium (P), and an intermediate transfer member cleaning device (30) that has a cleaning blade (60) coming into contact with the surface of the intermediate transfer member and cleans the surface of the intermediate transfer member, in which the intermediate transfer member has a surface layer (52) containing a resin, a conductive agent, and a silicone oil, a silicon element concentration on a surface of the surface layer is 0.5 atm% or more and 10.0 atm% or less, a tip angle of the cleaning blade is 95 degrees or more and 110 degrees or less, and a tip hardness of the cleaning blade is 86 degrees or more and 96 degrees or less.

## Description

### BACKGROUND OF THE INVENTION

### (i) Field of the Invention

The present disclosure relates to an image forming apparatus.

### (ii) Description of Related Art

JP2020-020915A discloses a cleaning blade of an image holder, in which a hardness of a material constituting a tip part of a blade member is 63 degrees or more and 90 degrees or less, and an angle formed by a tip surface parallel to a thickness direction of the blade member and a blade lower surface adjacent to the tip surface and facing the image holder is an obtuse angle.

### SUMMARY OF THE INVENTION

An object of the present disclosure is to provide an image forming apparatus in which toner is less likely to slip at a contact portion between an intermediate transfer member and a cleaning blade and the cleaning blade is less likely to be lifted from the intermediate transfer member, in a case where an image is continuously formed on recycled paper in a low-temperature and low-humidity environment and then continuously formed on thick paper in a high-temperature and high-humidity environment.

Specific methods for achieving the above-described object include the following aspects.
<1> According to a first aspect of the present disclosure, there is provided an image forming apparatus including a photoreceptor, a charging device that charges a surface of the photoreceptor, an electrostatic charge image forming device that forms an electrostatic charge image on a charged surface of the photoreceptor, a developing device that develops the electrostatic charge image formed on the surface of the photoreceptor with a developer containing a toner to form a toner image, an intermediate transfer member to which the toner image formed on the surface of the photoreceptor is transferred, a primary transfer device that transfers the toner image formed on the surface of the photoreceptor to a surface of the intermediate transfer member, a secondary transfer device that transfers the toner image transferred to the surface of the intermediate transfer member to a surface of a recording medium, and an intermediate transfer member cleaning device that has a cleaning blade coming into contact with the surface of the intermediate transfer member and cleans the surface of the intermediate transfer member, in which the intermediate transfer member has a surface layer containing a resin, a conductive agent, and a silicone oil, a silicon element concentration on a surface of the surface layer is 0.5 atm% or more and 10.0 atm% or less, a tip angle of the cleaning blade is 95 degrees or more and 110 degrees or less, and a tip hardness of the cleaning blade is 86 degrees or more and 96 degrees or less.
<2> According to a second aspect of the present disclosure, there is provided the image forming apparatus according to <1>, in which, in a case where the tip hardness of the cleaning blade is denoted by H1, a hardness of the cleaning blade at a position of a depth of 100 µm from a surface of the cleaning blade facing the intermediate transfer member is denoted by H2, and a hardness of the cleaning blade in a surface opposite to the surface facing the intermediate transfer member is denoted by H3, H1 > H2 > H3 and 1.1 ≤ H1/H3 < 1.3 may be satisfied.
<3> According to a third aspect of the present disclosure, there is provided the image forming apparatus according to <1> or <2>, in which the silicon element concentration on the surface of the surface layer in the intermediate transfer member may be 1.0 atm% or more and 5.0 atm% or less.
<4> According to a fourth aspect of the present disclosure, there is provided the image forming apparatus according to any one of <1> to <3>, in which a surface resistivity of the intermediate transfer member may be 9.0 logQ/o or more and 12.0 logQ/o or less.
<5> According to a fifth aspect of the present disclosure, there is provided the image forming apparatus according to any one of <1> to <4>, in which the cleaning blade may be a laminate of a first polyurethane layer constituting a surface facing the intermediate transfer member and a second polyurethane layer constituting a surface opposite to the surface facing the intermediate transfer member.

According to <1> or <5>, there is provided an image forming apparatus in which toner is less likely to slip at a contact portion between an intermediate transfer member and a cleaning blade, as compared with an image forming apparatus in which the silicon element concentration on the surface of the surface layer in the intermediate transfer member is less than 0.5 atm%; an image forming apparatus in which toner is less likely to slip at a contact portion between an intermediate transfer member and a cleaning blade, as compared with an image forming apparatus in which the tip angle of the cleaning blade in the intermediate transfer member cleaning device is less than 95 degrees or more than 110 degrees; an image forming apparatus in which toner is less likely to slip at a contact portion between an intermediate transfer member and a cleaning blade, as compared with an image forming apparatus in which the tip hardness of the cleaning blade in the intermediate transfer member cleaning device is less than 86 degrees; and an image forming apparatus in which toner is less likely to slip at a contact portion between an intermediate transfer member and a cleaning blade and the cleaning blade is less likely to be lifted from the intermediate transfer member, as compared with an image forming apparatus in which the tip hardness of the cleaning blade in the intermediate transfer member cleaning device is more than 96 degrees.

According to <2>, there is provided an image forming apparatus in which toner is less likely to slip at a contact portion between an intermediate transfer member and a cleaning blade, as compared with an image forming apparatus in which H1 > H2 > H3 is not satisfied; an image forming apparatus in which toner is less likely to slip at a contact portion between an intermediate transfer member and a cleaning blade, as compared with an image forming apparatus in which H1/H3 is less than 1.1; and an image forming apparatus in which toner is less likely to slip at a contact portion between an intermediate transfer member and a cleaning blade and the cleaning blade is less likely to be lifted from the intermediate transfer member, as compared with an image forming apparatus in which H1/H3 is 1.3 or less.

According to <3>, there is provided an image forming apparatus in which toner is less likely to slip at a contact portion between an intermediate transfer member and a cleaning blade, as compared with an image forming apparatus in which the silicon element concentration on the surface of the surface layer in the intermediate transfer member is less than 1.0 atm% or more than 5.0 atm%.

According to <4>, there is provided an image forming apparatus in which toner is less likely to slip at a contact portion between an intermediate transfer member and a cleaning blade, as compared with an image forming apparatus in which the surface resistivity of the intermediate transfer member is less than 9.0 logQ/o or more than 12.0 logΩ/□.

### BRIEF DESCRIPTION OF THE DRAWINGS

Exemplary embodiment(s) of the present invention will be described in detail based on the following figures, wherein:
FIG. 1 is a cross-sectional view of a cleaning blade that cleans an intermediate transfer member in the present exemplary embodiment;
FIG. 2 is a view schematically showing a configuration of an example of an image forming apparatus according to the present exemplary embodiment; and
FIG. 3 is a schematic perspective view showing an example of the intermediate transfer member in the present exemplary embodiment.

### DETAILED DESCRIPTION OF THE INVENTION

The exemplary embodiments of the present disclosure will be described below. The following descriptions and examples merely illustrate the exemplary embodiments, and do not limit the scope of the exemplary embodiments.

In the present disclosure, a numerical range described using "to" represents a range including numerical values listed before and after "to" as the minimum value and the maximum value respectively.

Regarding the numerical ranges described in stages in the present disclosure, the upper limit or lower limit of a numerical range may be replaced with the upper limit or lower limit of another numerical range described in stages. Furthermore, in the present disclosure, the upper limit or lower limit of a numerical range may be replaced with values described in examples.

In the present disclosure, the term "step" includes not only an independent step but a step that is not clearly distinguished from other steps as long as the purpose of the step is achieved.

In the present disclosure, in a case where an exemplary embodiment is described with reference to drawings, the configuration of the exemplary embodiment is not limited to the configuration shown in the drawings. In addition, the sizes of members in each drawing are conceptual and do not limit the relative relationship between the sizes of the members.

In the present disclosure, each component may include a plurality of corresponding substances. In a case where the amount of each component in a composition is mentioned in the present disclosure, and there are two or more kinds of substances corresponding to each component in the composition, unless otherwise specified, the amount of each component means the total amount of two or more kinds of the substances present in the composition.

In the present disclosure, each component may include two or more kinds of corresponding particles. In a case where there are two or more kinds of particles corresponding to each component in a composition, unless otherwise specified, the particle size of each component means a value for a mixture of two or more kinds of the particles present in the composition.

In the present disclosure, "photoreceptor" refers to "electrophotographic photoreceptor".

In the present disclosure, "axial direction" of the photoreceptor means a direction in which a rotation axis of the photoreceptor extends, and "circumferential direction" of the photoreceptor means a rotation direction of the photoreceptor.

### <Image Forming Apparatus>

The image forming apparatus according to the present exemplary embodiment includes a photoreceptor, a charging device that charges a surface of the photoreceptor, an electrostatic charge image forming device that forms an electrostatic charge image on a charged surface of the photoreceptor, a developing device that develops the electrostatic charge image formed on the surface of the photoreceptor with a developer containing a toner to form a toner image, an intermediate transfer member to which the toner image formed on the surface of the photoreceptor is transferred, a primary transfer device that transfers the toner image formed on the surface of the photoreceptor to a surface of the intermediate transfer member, a secondary transfer device that transfers the toner image transferred to the surface of the intermediate transfer member to a surface of a recording medium, and an intermediate transfer member cleaning device that has a cleaning blade coming into contact with the surface of the intermediate transfer member and cleans the surface of the intermediate transfer member.

In the image forming apparatus according to the present exemplary embodiment, the intermediate transfer member has a surface layer containing a resin, a conductive agent, and a silicone oil, a silicon element concentration on a surface of the surface layer is 0.5 atm% or more and 10.0 atm% or less, a tip angle of the cleaning blade in the intermediate transfer member cleaning device is 95 degrees or more and 110 degrees or less, and a tip hardness of the cleaning blade in the intermediate transfer member cleaning device is 86 degrees or more and 96 degrees or less.

In the image forming apparatus according to the present exemplary embodiment, since the surface layer of the intermediate transfer member and the cleaning blade cleaning the intermediate transfer member have the above-described configurations, in a case where an image is continuously formed on recycled paper in a low-temperature and low-humidity environment and then continuously formed on thick paper in a high-temperature and high-humidity environment, toner is less likely to slip at a contact portion between the intermediate transfer member and the cleaning blade and the cleaning blade is less likely to be lifted from the intermediate transfer member.

The surface of the surface layer in the intermediate transfer member is a surface to which the toner image is transferred.

In a case where the silicon element concentration on the surface of the surface layer in the intermediate transfer member is less than 0.5 atm%, a friction coefficient is increased, so that tip behavior of the cleaning blade is unstable, and thus a colloidal rolling effect of an external additive attached to the intermediate transfer member is reduced. Therefore, deposition of paper dust is increased, and thus the toner is likely to slip from the contact portion between the intermediate transfer member and the cleaning blade. From the viewpoint of suppressing the event, the silicon element concentration on the surface of the surface layer in the intermediate transfer member is 0.5 atm% or more. The silicon element concentration on the surface of the surface layer in the intermediate transfer member is appropriately 10.0 atm% or less.

From the viewpoint of preventing the toner from slipping from the contact portion between the intermediate transfer member and the cleaning blade, the silicon element concentration on the surface of the surface layer in the intermediate transfer member is, for example, preferably 1.0 atm% or more and 5.0 atm% or less, and more preferably 2.0 atm% or more and 4.0 atm% or less.

In a case where the tip angle of the cleaning blade cleaning the intermediate transfer member is less than 95 degrees, a tip retraction amount of the cleaning blade is large and an amplitude of the tip is large, so that the behavior is unstable, deposition of paper dust is increased, and the toner is likely to slip from the contact portion between the intermediate transfer member and the cleaning blade. From the viewpoint of suppressing the event, the tip angle of the cleaning blade is 95 degrees or more, and for example, preferably 96 degrees or more, and more preferably 97 degrees or more.

In a case where the tip angle of the cleaning blade cleaning the intermediate transfer member is more than 110 degrees, a surface pressure is insufficient and a force for blocking the toner is decreased, so that the toner is likely to slip from the contact portion between the intermediate transfer member and the cleaning blade. From the viewpoint of suppressing the event, the tip angle of the cleaning blade is 110 degrees or less, and for example, preferably 105 degrees or less, and more preferably 100 degrees or less.

In a case where the tip hardness of the cleaning blade cleaning the intermediate transfer member is less than 86 degrees, a tip retraction amount of the cleaning blade is large and an amplitude of the tip is large, so that the behavior is unstable and the toner is likely to slip from the contact portion between the intermediate transfer member and the cleaning blade. From the viewpoint of suppressing the event, the tip hardness of the cleaning blade is 86 degrees or more, and for example, preferably 87 degrees or more, and more preferably 88 degrees or more.

In a case where the tip hardness of the cleaning blade cleaning the intermediate transfer member is more than 96 degrees, followability is decreased and a torque is increased, so that the toner is likely to slip from the contact portion between the intermediate transfer member and the cleaning blade, and the cleaning blade is likely to be lifted from the intermediate transfer member. From the viewpoint of suppressing the event, the tip hardness of the cleaning blade is 96 degrees or less, and for example, preferably 94 degrees or less, and more preferably 92 degrees or less.

From the viewpoint that the toner is less likely to slip at the contact portion between the intermediate transfer member and the cleaning blade and the cleaning blade is less likely to be lifted from the intermediate transfer member, for example, the cleaning blade cleaning the intermediate transfer member preferably satisfies the following requirement.

That is, in a case where the tip hardness of the cleaning blade is denoted by H1, a hardness of the cleaning blade at a position of a depth of 100 µm from a surface of the cleaning blade facing the intermediate transfer member is denoted by H2, and a hardness of the cleaning blade in a surface opposite to the surface facing the intermediate transfer member is denoted by H3, for example, it is preferable that H1 > H2 > H3 and 1.1 ≤ H1/H3 < 1.3 are satisfied.

In a case where H1/H3 is 1.1 or more, the increase in torque is suppressed as compared with a case where H1/H3 is less than 1.1, and thus the cleaning blade is less likely to be lifted from the intermediate transfer member.

In a case where H1/H3 is less than 1.3, intrusion of the paper dust into the tip of the cleaning blade is suppressed as compared with a case where H1/H3 is 1.3 or more, so that slipping of the toner caused by disintegration of the deposited paper dust is suppressed, and thus the toner is less likely to slip at the contact portion between the intermediate transfer member and the cleaning blade.

The hardness H2 of the cleaning blade at a position of a depth of 100 µm from a surface of the cleaning blade facing the intermediate transfer member is, for example, preferably 85 degrees or more and 94 degrees or less, more preferably 86 degrees or more and 92 degrees or less, and still more preferably 87 degrees or more and 90 degrees or less.

The hardness H3 of the cleaning blade in a surface opposite to the surface facing the intermediate transfer member is, for example, preferably 73 degrees or more and 85 degrees or less, more preferably 75 degrees or more and 83 degrees or less, and still more preferably 78 degrees or more and 81 degrees or less.

The silicon element concentration on the surface of the surface layer in the intermediate transfer member is obtained by the following measuring method.

The surface of the surface layer (the surface to which the toner image is transferred) is analyzed by X-ray photoelectron spectroscopy (XPS), and a silicon element concentration (atm%) is calculated from the peak intensity of all the elements detected. Measurement conditions of the XPS are as follows.
· XPS device: JPS-9000MX, JEOL Ltd.
· X-ray source: MgKα ray
· Acceleration voltage: 10 kV
· Emission current: 30 mA

The number of measurement points is 18 points in total, which is 6 points at equal intervals in a circumferential direction of the intermediate transfer member and 3 points at a center portion and both end portions in a width direction of the intermediate transfer member. Measured values of the 18 measurement points are arithmetically averaged.

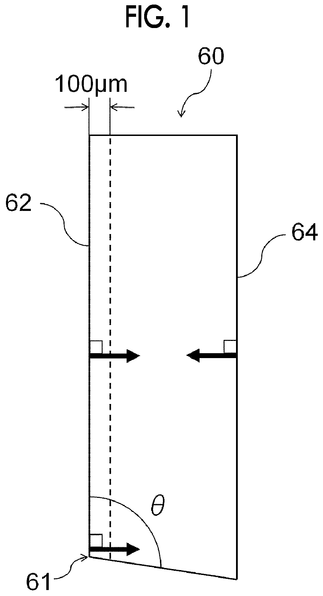

The tip angle of the cleaning blade cleaning the intermediate transfer member will be described with reference to FIG. 1. FIG. 1 is a cross-sectional view of a cleaning blade 60 cut in parallel to a rotation direction of the intermediate transfer member and perpendicular to an axial direction. FIG. 1 shows the cleaning blade 60 in a state of not being in contact with an outer peripheral surface of the intermediate transfer member.

A corner portion 61 of the cleaning blade 60 comes into contact with the outer peripheral surface of the rotating intermediate transfer member to clean the surface of the intermediate transfer member. The tip angle of the cleaning blade 60 is an angle θ of the corner portion 61 in a state of not being in contact with the outer peripheral surface of the intermediate transfer member.

The cleaning blade 60 is cut such that the cross section shown in FIG. 1 is formed, the corner portion 61 of the cross section is enlarged with a microscope to measure the tip angle. Five points are measured at equal intervals in a length direction of the cleaning blade (axial direction of the intermediate transfer member), and measured values thereof are arithmetically averaged.

The tip hardness H1 of the cleaning blade cleaning the intermediate transfer member, the H2, and H3 are obtained by the following measuring method. The measurement method will be described with reference to FIG. 1.
· Hardness H1: tip hardness of the cleaning blade: measured in vicinity of the corner portion 61
· Hardness H2: hardness of the cleaning blade at a position of a depth of 100 µm from a surface of the cleaning blade facing the intermediate transfer member: a cross section at the position of a depth of 100 µm from a surface 62 on the corner portion 61 side is formed, and is measured at a center portion in a height direction (up-down direction in FIG. 1)
· Hardness H3: hardness of the cleaning blade in a surface opposite to the surface facing the intermediate transfer member: measured at a center portion of a surface 64 in the height direction (up-down direction in FIG. 1)

A measurement environment is a temperature of 22°C and a relative humidity of 55%. A sample is placed in the measurement environment for 24 hours or more, and the temperature and humidity are controlled. The measurement is performed according to a hardness test method specified in JIS K 6253:1997 using a type A durometer specified in JIS K 7215:1986. A push pin of the type A durometer is pressed against the measurement part of the sample. The direction in which the push pin is pressed is a direction perpendicular to the surface (the surface 62 and the surface 64 in FIG. 1) (a direction of the arrow shown in FIG. 1). The maximum value of a guideline is read within 1 second after the push pin is pressed against the measurement part of the sample. Five points are measured at equal intervals in a length direction of the cleaning blade (axial direction of the intermediate transfer member), and measured values thereof are arithmetically averaged.

Hereinafter, a configuration of the image forming apparatus according to the present exemplary embodiment will be described in detail.

The image forming apparatus according to the exemplary embodiment includes a photoreceptor, a charging device, an electrostatic charge image forming device, a developing device, an intermediate transfer member, a primary transfer device, a secondary transfer device, and an intermediate transfer member cleaning device. The image forming apparatus according to the exemplary embodiment is an image forming apparatus of an intermediate transfer method.

The image forming apparatus according to the present exemplary embodiment may further include a fixing device that fixes the toner image transferred to the surface of the recording medium, a static elimination device that removes charges by irradiating the surface of the photoreceptor after the transfer of the toner image and before the charging with charge removing light, and the like.

In the image forming apparatus according to the present exemplary embodiment, a portion including the photoreceptor may have a cartridge structure (process cartridge) that is attachable to and detachable from the image forming apparatus.

An example of the image forming apparatus according to the present exemplary embodiment will be shown below, but the present invention is not limited thereto. Among the parts shown in the drawing, main parts will be described, and others will not be described.

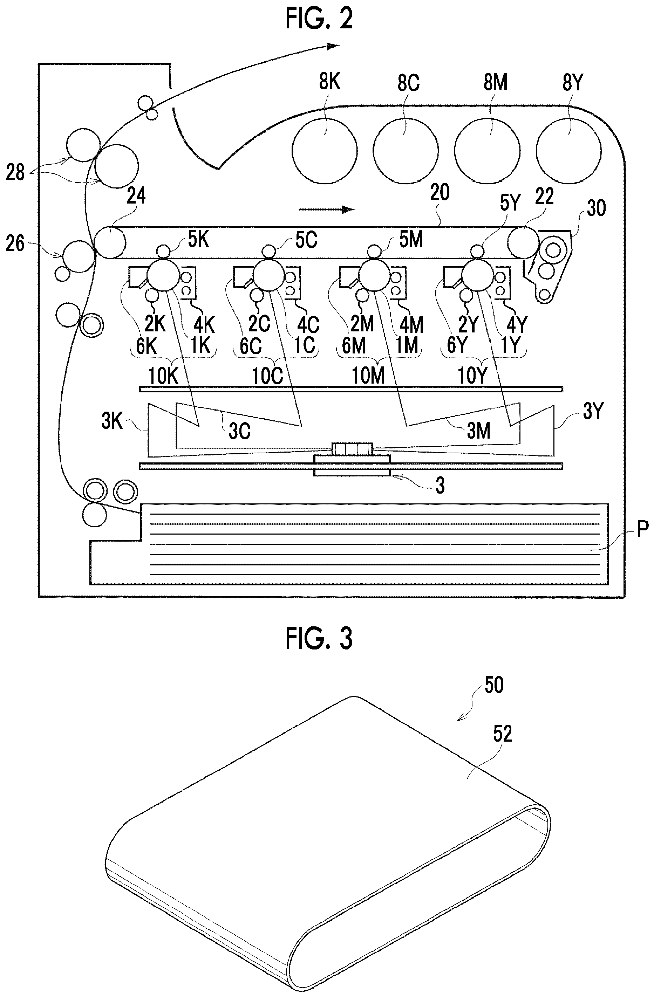

FIG. 2 is a view schematically showing the configuration of the image forming apparatus according to the present exemplary embodiment.

The image forming apparatus shown in FIG. 2 includes first to fourth image forming units 10Y, 10M, 10C, and 10K adopting an electrophotographic method that output images of colors, yellow (Y), magenta (M), cyan (C), and black (K), based on color-separated image data. These image forming units (hereinafter, simply referred to as "units" in some cases) 10Y, 10M, 10C, and 10K are arranged in a row in the horizontal direction in a state of being spaced apart by a predetermined distance. The units 10Y, 10M, 10C, and 10K may be process cartridges that are detachable from the image forming apparatus.

An intermediate transfer belt (an example of the intermediate transfer member) 20 passing through above the units 10Y, 10M, 10C, and 10K extends under the units. The intermediate transfer belt 20 is looped around a driving roll 22 and a support roll 24, and runs toward the fourth unit 10K from the first unit 10Y. Force is applied to the support roll 24 in a direction away from the driving roll 22 by a spring or the like (not shown in the drawing), and a tension is applied to the intermediate transfer belt 20 looped over the two rolls. An intermediate transfer member cleaning device 30 facing the driving roll 22 is provided on a surface of the intermediate transfer belt 20 on the photoreceptor side.

Yellow, magenta, cyan, and black toners contained in containers of toner cartridges 8Y, 8M, 8C, and 8K are supplied to developing devices 4Y, 4M, 4C, and 4K of the units 10Y, 10M, 10C, and 10K, respectively.

The first to fourth units 10Y, 10M, 10C, and 10K have the same configuration and operation. Therefore, in the present specification, as a representative, the first unit 10Y will be described that is placed on the upstream side of the running direction of the intermediate transfer belt and forms a yellow image.

The first unit 10Y includes a photoreceptor 1Y. Around the photoreceptor 1Y, a charging roll (an example of the charging device) 2Y that charges the surface of the photoreceptor 1Y at a predetermined potential, an exposure device (an example of the electrostatic charge image forming device) 3 that exposes the charged surface to a laser beam 3Y based on color-separated image signals to form an electrostatic charge image, a developing device 4Y that develops the electrostatic charge image by supplying a charged toner to the electrostatic charge image, a primary transfer roll (an example of the primary transfer device) 5Y that transfers the developed toner image onto the intermediate transfer belt 20, and a photoreceptor cleaning device 6Y that removes the residual toner on the surface of the photoreceptor 1Y after the primary transfer are arranged in this order.

The primary transfer roll 5Y is disposed on the inner side of the intermediate transfer belt 20, at a position facing the photoreceptor 1Y. A bias power supply (not shown in the drawing) for applying a primary transfer bias is connected to primary transfer rolls 5Y, 5M, 5C, and 5K of each unit. Each bias power supply changes the transfer bias applied to each primary transfer roll under the control of a control unit not shown in the drawing.

The photoreceptor cleaning device 6Y includes a cleaning blade that comes into contact with the surface of the photoreceptor 1Y. The cleaning blade comes into contact with the surface of the photoreceptor 1Y that continues to rotate even after the toner image is transferred to the intermediate transfer belt 20, and removes the toner remaining on the surface of the photoreceptor 1Y.

A secondary transfer roll (an example of the secondary transfer device) 26 and a support roll 24 are provided downstream of the fourth unit 10K. The secondary transfer roll 26 is disposed on the image holding surface side of the intermediate transfer belt 20, the support roll 24 is disposed to be in contact with the inner surface of the intermediate transfer belt 20, and the secondary transfer roll 26 and the support roll 24 constitute a secondary transfer unit.

The intermediate transfer member cleaning device 30 includes a cleaning blade that comes into contact with the surface of the intermediate transfer belt 20. The cleaning blade comes into contact with the surface of the intermediate transfer belt 20 that continues to run even after the toner image is transferred to the recording medium, and removes the toner remaining on the surface of the intermediate transfer belt 20.

Hereinafter, the operation that the first unit 10Y carries out to form a yellow image will be described.

First, prior to the operation, the surface of the photoreceptor 1Y is charged to a potential of -600 V to -800 V by the charging roll 2Y.

The photoreceptor 1Y is formed of a photosensitive layer laminated on a conductive (for example, volume resistivity at 20°C: 1 × 10⁻⁶ Ω·cm or less) substrate. The photosensitive layer has properties in that although this layer usually has a high resistance (resistance of a general resin), in a case where the photosensitive layer is irradiated with the laser beam, the specific resistance of the portion irradiated with the laser beam changes. From the exposure **device** 3, the laser beam 3Y is radiated to the surface of the charged photoreceptor 1Y according to the image data for yellow transmitted from the control unit not shown in the drawing. As a result, an electrostatic charge image of the yellow image pattern is formed on the surface of the photoreceptor 1Y.

The electrostatic charge image is an image formed on the surface of the photoreceptor 1Y by charging. The image is a so-called negative latent image formed in a manner in which the charges with which the surface of the photoreceptor 1Y is charged flow due to the reduction in the specific resistance of the portion of the photosensitive layer irradiated with the laser beam 3Y, but the charges in a portion not being irradiated with the laser beam 3Y remain.

The electrostatic charge image formed on the photoreceptor 1Y rotates to a predetermined development position as the photoreceptor 1Y runs. At the development position, the electrostatic charge image on the photoreceptor 1Y is developed as a toner image by the developing device 4Y and visualized.

The developing device 4Y contains, for example, an electrostatic charge image developer that contains at least a yellow toner and a carrier. By being stirred in the developing device 4Y, the yellow toner undergoes triboelectrification, carries charges of the same polarity (negative polarity) as the charges with which the surface of the photoreceptor 1Y is charged, and is held on a developer roll (an example of a developer holder). As the surface of the photoreceptor 1Y passes through the developing device 4Y, the yellow toner electrostatically adheres to the neutralized latent image portion on the surface of the photoreceptor 1Y, and the latent image is developed by the yellow toner. The photoreceptor 1Y on which the yellow toner image is formed keeps on running at a predetermined speed, and the toner image developed on the photoreceptor 1Y is transported to a predetermined primary transfer position.

In a case where the yellow toner image on the photoreceptor 1Y is transported to the primary transfer position, a primary transfer bias is applied to the primary transfer roll 5Y, and electrostatic force heading for the primary transfer roll 5Y from the photoreceptor 1Y acts on the toner image. As a result, the toner image on the photoreceptor 1Y is transferred onto the intermediate transfer belt 20. The transfer bias applied at this time has a polarity (+) opposite to the polarity (-) of the toner. In the first unit 10Y, the transfer bias is set, for example, to +10 µA under the control of the control unit (not shown in the drawing).

After transferring the toner image to the intermediate transfer belt 20, the photoreceptor 1Y continues to rotate and comes into contact with the cleaning blade in the photoreceptor cleaning device 6Y. The residual toner on the photoreceptor 1Y is removed by a photoreceptor cleaning device 6Y and collected.

The primary transfer bias applied to the primary transfer rolls 5M, 5C, and 5K following the second unit 10M is also controlled according to the first unit.

In this way, the intermediate transfer belt 20 to which the yellow toner image is transferred in the first unit 10Y is sequentially transported through the second to fourth units 10M, 10C, and 10K, and the toner images of each color are superimposed and transferred in layers.

The intermediate transfer belt 20, to which the toner images of four colors are transferred in layers through the first to fourth units, reaches a secondary transfer portion configured with the intermediate transfer belt 20, the support roll 24 in contact with the inner surface of the intermediate transfer belt 20, and a secondary transfer roll 26 disposed on the image holding surface side of the intermediate transfer belt 20. On the other hand, via a supply mechanism, recording paper P (an example of recording medium) is supplied at a predetermined timing to the gap between the secondary transfer roll 26 and the intermediate transfer belt 20 that are in contact with each other. Furthermore, secondary transfer bias is applied to the support roll 24. The transfer bias applied at this time has the same polarity (-) as the polarity (-) of the toner. The electrostatic force heading for the recording paper P from the intermediate transfer belt 20 acts on the toner image, that makes the toner image on the intermediate transfer belt 20 transferred onto a recording paper P. The secondary transfer bias to be applied at this time is determined according to the resistance detected by a resistance detecting unit (not shown in the drawing) for detecting the resistance of the secondary transfer portion, and the voltage thereof is controlled.

The intermediate transfer belt 20 after transferring the toner image to the recording paper P continues to run and comes into contact with the cleaning blade in the intermediate transfer member cleaning device 30. The residual toner on the intermediate transfer belt 20 is removed by the intermediate transfer member cleaning device 30 and collected. A contact pressure of the cleaning blade (pressure applied in the thickness direction of the intermediate transfer belt 20) is, for example, 1 g/mm or more and 5 g/mm or less. A contact angle of the cleaning blade is, for example, 5 degrees or more and 30 degrees or less. A contact width of the cleaning blade is, for example, 0.1 mm or more and 2 mm or less.

The recording paper P to which the toner image has been transferred is transported into a pressure contact portion (nip portion) of a pair of fixing rolls in a fixing device 28, the toner image is fixed to the surface of the recording paper P, and a fixed image is formed.

Examples of the recording paper P to which the toner image is transferred include plain paper used in an electrophotographic copying machine, coated paper in which a surface of the plain paper is coated with a resin or the like, and art paper for printing. Examples of the recording medium include a resin sheet in addition to the paper.

The recording paper P on which the colored image has been fixed is transported to an output portion, and a series of colored image forming operations is finished.

### [Intermediate Transfer Member]

FIG. 3 is a schematic perspective view showing an example of the intermediate transfer member. An intermediate transfer member 50 shown in FIG. 3 is an endless belt-like member. The intermediate transfer member is not limited thereto and may be in a form of a roll or a sheet. The intermediate transfer member 50 has a surface layer 52 containing a resin, a conductive agent, and a silicone oil.

The intermediate transfer member has a surface layer containing a resin, a conductive agent, and a silicone oil. The intermediate transfer member may have a layer other than the surface layer, and for example, may have, under the surface layer, a metal layer or a resin layer not containing the silicone oil.

Examples of the resin contained in the surface layer include polyphenylene sulfide (PPS), polyamide (PA), polyamideimide (PAI), polyetherimide (PEI), polyimide (PI), polyetheretherketone (PEEK), polyethersulfone (PES), polyphenylsulfone (PPSU), polysulfone (PSF), polyethylene terephthalate (PET), polybutylene terephthalate (PBT), polyacetal (POM), polycarbonate (PC), and polyvinylidene fluoride (PVdF). From the viewpoint of strength, durability, environmental stability, and cleaning properties of the intermediate transfer member, for example, at least one resin selected from the group consisting of polyimide, polyamideimide, polyphenylene sulfide, polyamide, and polyvinylidene fluoride is preferable; and polyimide is more preferable. One kind of the resin may be used alone, or two or more kinds thereof may be used in combination.

Examples of the conductive agent contained in the surface layer include granules (or powders) including carbon black such as ketjen black and acetylene black; thermally decomposed carbon, graphite; various conductive metals such as aluminum, copper, nickel, and stainless steel or alloys thereof; various conductive metal oxides such as tin oxide, indium oxide, titanium oxide, a tin oxide-antimony oxide solid solution, and a tin oxide-indium oxide solid solution; a substance obtained by performing a conduction treatment on the surface of an insulating material; and the like. From the viewpoint of cost, stability, and the like, for example, carbon black is preferable. One kind of the conductive agent may be used alone, or two or more kinds thereof may be used in combination.

The conductive agent particles may be subjected to various surface treatments. Examples of the surface treatment include known surface treatments such as a resin coating treatment and a fluorine coating treatment.

From the viewpoint of efficiently forming a conductive path by dispersion, a number-average particle diameter of the conductive agent particles is, for example, preferably 5 nm or more and 25 nm or less, more preferably 8 nm or more and 20 nm or less, and still more preferably 10 nm or more and 18 nm or less.

The number-average particle diameter of the conductive agent particles is obtained by observing a cross section of the surface layer in an enlarged manner with a microscope, measuring major diameters of 100 conductive agent particles randomly selected, and arithmetically averaging the measured values.

From the viewpoint of setting a surface resistivity of the intermediate transfer member within an appropriate range, a content of the conductive agent contained in the surface layer is, for example, preferably 1 part by mass or more and 10 parts by mass or less, more preferably 2 parts by mass or more and 8 parts by mass or less, and still more preferably 3 parts by mass or more and 6 parts by mass or less with respect to 100 parts by mass of the resin.

Examples of the silicone oil contained in the surface layer include at least one selected from the group consisting of dimethylpolysiloxane and an organic group-substituted derivative of dimethylpolysiloxane.

From the viewpoint of excellent dispersibility of conductive carbon particles in the surface layer, the silicone oil is, for example, preferably an aralkyl-modified silicone oil. Examples of the aralkyl-modified silicone oil include a methylstyryl-modified silicone oil.

From the viewpoint of preventing the toner from slipping from the contact portion between the intermediate transfer member and the cleaning blade, a content of the silicone oil contained in the surface layer is, for example, preferably 1.5 parts by mass or more and 10 parts by mass or less, more preferably 2 parts by mass or more and 8 parts by mass or less, and still more preferably 3 parts by mass or more and 6 parts by mass or less with respect to 100 parts by mass of the resin.

From the viewpoint of preventing the toner from slipping from the contact portion between the intermediate transfer member and the cleaning blade, the silicon element concentration on the surface of the surface layer in the intermediate transfer member is 0.5 atm% or more, and for example, preferably 0.5 atm% or more and 10.0 atm% or less, more preferably 1.0 atm% or more and 5.0 atm% or less, and still more preferably 2.0 atm% or more and 4.0 atm% or less.

The silicon element concentration on the surface of the surface layer can be controlled by the content of the silicone oil contained in the surface layer.

A thickness of the surface layer is, for example, preferably 40 µm or more and 120 µm or less, more preferably 50 µm or more and 110 µm or less, and still more preferably 60 µm or more and 100 µm or less.

The thickness of the surface layer is measured using an eddy current type film thickness meter. The number of measurement points is 18 points in total, which is 6 points at equal intervals in a circumferential direction of the intermediate transfer member and 3 points at a center portion and both end portions in a width direction of the intermediate transfer member. Measured values of the 18 measurement points are arithmetically averaged.

From the viewpoint of preventing the toner from slipping from the contact portion between the intermediate transfer member and the cleaning blade, a surface resistivity of the intermediate transfer member is, for example, preferably 9.0 logΩ/□ or more and 12.0 logΩ/□ or less.

In a case where the surface resistivity of the intermediate transfer member is 9.0 logΩ/□ or more, transferability to uneven paper is excellent as compared with a case where the surface resistivity of the intermediate transfer member is less than 9.0 logΩ/□, so that the total number of toner entering the cleaning blade is small, and thus the toner is less likely to slip at the contact portion between the intermediate transfer member and the cleaning blade. From the viewpoint, the surface resistivity of the intermediate transfer member is, for example, more preferably 9.5 logQ/o or more, and still more preferably 10.0 logQ/o or more.

In a case where the surface resistivity of the intermediate transfer member is 12.0 logQ/o or less, transfer bias is not a high voltage as compared with a case where the surface resistivity is more than 12.0 logQ/o, so that an increase in friction coefficient due to a discharge product is suppressed, and tip behavior of the cleaning blade is stable, and thus the toner is less likely to slip at the contact portion between the intermediate transfer member and the cleaning blade. From the viewpoint, the surface resistivity of the intermediate transfer member is, for example, more preferably 11.5 logQ/o or less, and still more preferably 11.0 logΩ/□ or less.

The surface resistivity of the intermediate transfer member is obtained by the following measuring method.

A measurement environment is a temperature of 22°C and a relative humidity of 55%. A sample is placed in the measurement environment for 24 hours or more, and the temperature and humidity are controlled. A microcurrent meter (R8430A, Advantest Corporation) is used as a resistance measuring device, and UR probe (Mitsubishi Chemical Analytech Co., Ltd.) is used as a probe. An application voltage is 500 V, an application time is 10 seconds, and a pressurization is 1 kgf. The number of measurement points is 18 points in total, which is 6 points at equal intervals in a circumferential direction of the intermediate transfer member and 3 points at a center portion and both end portions in a width direction of the intermediate transfer member. Measured values of the 18 measurement points are arithmetically averaged.

The surface resistivity of the intermediate transfer member can be adjusted by the kind of the resin constituting the surface layer and the kind and content of the conductive agent.

A thickness of the intermediate transfer member is, for example, preferably 40 µm or more and 120 µm or less, more preferably 50 µm or more and 110 µm or less, and still more preferably 60 µm or more and 100 µm or less.

The thickness of the intermediate transfer member is measured using an eddy current type film thickness meter. The number of measurement points is 18 points in total, which is 6 points at equal intervals in a circumferential direction of the intermediate transfer member and 3 points at a center portion and both end portions in a width direction of the intermediate transfer member. Measured values of the 18 measurement points are arithmetically averaged.

Examples of a method for manufacturing the intermediate transfer member include a manufacturing method of preparing a coating solution for forming at least the surface layer, applying the coating solution to a mold to form a coating film, and drying the coating film to form the surface layer. As necessary, a baking step of the surface layer is further performed.

### [Cleaning Blade Cleaning Intermediate Transfer Member]

In the intermediate transfer member cleaning device, the cleaning blade is provided to be supported by, for example, a rigid plate-like support member.

The cleaning blade may be configured with a single layer, two layers, or three or more layers.

For example, it is preferable that at least a portion of the cleaning blade that comes into contact with the intermediate transfer member is made of polyurethane.

The cleaning blade is, for example, preferably a polyurethane laminate of a first polyurethane layer constituting a surface facing the intermediate transfer member and a second polyurethane layer present on a back surface side of the first polyurethane layer (a surface opposite to the surface facing the intermediate transfer member). A corner portion of the first polyurethane layer is a portion that comes into contact with the rotating intermediate transfer member to clean the surface of the intermediate transfer member. According to the present aspect, the hardness H1, the hardness H2, and the hardness H3 of the cleaning blade can be easily controlled to H1 > H2 > H3.

For example, it is preferable that a hardness of the first polyurethane layer is higher than a hardness of the second polyurethane layer. For example, it is preferable that a difference between the hardness of the first polyurethane layer and the hardness of the second polyurethane layer is set such that the relationship of 1.1 ≤ H1/H3 < 1.3 is satisfied for the hardness H1 and the hardness H3.

The hardness of the first polyurethane layer and the hardness of the second polyurethane layer can be controlled, for example, by using a urethane rubber having a hard segment and a soft segment as a material, and controlling a content ratio of the hard segment and the soft segment included in the urethane rubber.

Examples of a method for manufacturing the cleaning blade include a method of manufacturing the polyurethane laminate of the first polyurethane layer and the second polyurethane layer, cutting the polyurethane laminate into an intended dimension, and modifying a surface of the polyurethane laminate to reinforce the hardness in the vicinity of the surface. The hardness H1, the hardness H2, and the hardness H3 of the cleaning blade are controlled to H1 > H2 > H3 by making the hardness of the first polyurethane layer higher than the hardness of the second polyurethane layer, and further modifying the surface of the polyurethane laminate.

The polyurethane laminate can be manufactured, for example, by a method of separately manufacturing the first polyurethane layer and the second polyurethane layer, and bonding the two layers with an adhesive; or a method of pouring a material of the first polyurethane layer and a material of the second polyurethane layer into a mold with a time difference, and bonding an interface between the two materials.

The polyurethane is generally a polymer of polyisocyanate and polyol.

The polyurethane is, for example, preferably urethane rubber. The hardness of the urethane rubber can be controlled by a content ratio of a hard segment and a soft segment in the urethane rubber.

Examples of the polyisocyanate include 4,4'-diphenylmethane diisocyanate (MDI), 2,6-toluene diisocyanate (TDI), 1,6-hexane diisocyanate (HDI), 1,5-naphthalene diisocyanate (NDI), and 3,3'-dimethylbiphenyl-4,4'-diisocyanate (TODI).

As the polyisocyanate, for example, MDI, NDI, or HDI is preferable.

The polyol includes a high-molecular-weight polyol and a low-molecular-weight polyol.

The high-molecular-weight polyol is a polyol having a number-average molecular weight of 500 or more (for example, preferably 500 or more and 5,000 or less). Examples of the high-molecular-weight polyol include known polyols such as a polyester polyol obtained by dehydration condensation of a low-molecular-weight polyol and a dibasic acid, a polycarbonate polyol obtained by a reaction between a low-molecular-weight polyol and an alkyl carbonate, a polycaprolactone polyol, and a polyether polyol.

Examples of the low-molecular-weight polyol include 1,3-propanediol, 1,4-butanediol, 1,5-pentanediol, 1,6-hexanediol, 1,7-heptanediol, 1,8-octanediol, 1,9-nonanediol, 1,10-decanediol, 1,11-undecanediol, 1,12-dodecanediol, 1,13-tridecanediol, 1,14-tetradecanediol, 1,18-octadecanediol, and 1,20-eicosanediol.

Examples of the soft segment material include the high-molecular-weight polyol component among the polyols. One kind of the soft segment material may be used alone, or two or more kinds thereof may be used in combination.

As the hard segment material, a chain extender is used. Examples of the chain extender include polyols having a molecular weight of 300 or less, such as 1,4-butanediol, ethylene glycol, diethylene glycol, propylene glycol, dipropylene glycol, hexanediol, 1,4-cyclohexanediol, 1,4-cyclohexanedimethanol, xylene glycol, triethylene glycol, trimethylolpropane, glycerin, pentaerythritol, sorbitol, and 1,2,6-hexanetriol.

One kind of the hard segment material may be used alone, or two or more kinds thereof may be used in combination.

As the hard segment material, a resin having a functional group capable of reacting with an isocyanate group may be used. The resin is, for example, preferably a flexible resin, and is, for example, preferably a linear aliphatic resin from the viewpoint of flexibility. Examples thereof include an acrylic resin having two or more hydroxyl groups, a polybutadiene resin having two or more hydroxyl groups, and an epoxy resin having two or more epoxy groups.

The urethane rubber can be produced by forming a composition obtained by mixing a polyisocyanate, a polyol (for example, the hard segment material and the soft segment material), a crosslinking agent, and a catalyst. Examples of the crosslinking agent include a diol, a triol, and a tetraol. Examples of the catalyst include a tertiary amine, a quaternary ammonium salt, and an organic tin compound.

Examples of the surface modification of the polyurethane laminate include a treatment of impregnating the vicinity of the surface of the polyurethane laminate with an isocyanate compound, and curing the isocyanate compound.

Examples of the isocyanate compound used for the surface modification of the polyurethane laminate include 2,6-toluene diisocyanate (TDI), 4,4'-diphenylmethane diisocyanate (MDI), p-phenylenediisocyanate (PPDI), 1,5-naphthalene diisocyanate (NDI), 3,3'-dimethylbiphenyl-4,4'-diisocyanate (TODI), and a polymer and a modified product thereof.

The immersion of the isocyanate compound into the vicinity of the surface of the polyurethane laminate can be performed by immersing the polyurethane laminate in an isocyanate compound-containing solution. In this case, a depth of the surface modification can be adjusted depending on duration of the immersion. For example, the hardness H1 > the hardness H2 can be achieved by pulling up the polyurethane laminate from the isocyanate compound-containing solution before the isocyanate compound reaches a position at a depth of 100 µm from the surface of the first polyurethane layer.

A pressing pressure of the cleaning blade against the intermediate transfer member is, for example, preferably 1.0 gf/mm or more and 4.0 gf/mm or less, more preferably 1.5 gf/mm or more and 3.5 gf/mm or less, and still more preferably 2.0 gf/mm or more and 3.0 gf/mm or less.

### [Examples]

Hereinafter, the present exemplary embodiments will be specifically described based on Examples. However, the present exemplary embodiments are not limited to Examples. In the following description, unless otherwise specified, "parts" and "%" are based on mass.

In the following description, the synthesis, the treatment, the production, the test, and the like are carried out at room temperature (25°C ± 3°C) unless otherwise specified.

### <Production of Intermediate Transfer Belt>

### [Intermediate Transfer Belt (1)]

### -Preparation of Polyamic Acid Solution-

85 parts of 4,4'-diaminodiphenyl ether is added to 800 parts of N-methyl-2-pyrrolidone, and the mixture is stirred and dissolved at room temperature. 115 parts of 3,3',4,4'-biphenyltetracarboxylic acid dianhydride is gradually added thereto, and the mixture is dissolved. A liquid temperature is raised to 60°C, and a polymerization reaction is carried out for 20 hours while maintaining the liquid temperature. After the polymerization reaction, the reaction solution is filtered through a stainless mesh, and cooled to room temperature to obtain a polyamic acid solution.

### -Preparation of Coating Solution-

| | |
|---|---|
| · Polyamic acid solution (concentration of solid contents: 50%) | 200 parts ··· 100 parts of solid contents |
| · Carbon black | 4 parts |
| · Silicone oil | 5.5 parts |

The above-described materials are mixed and dispersed by a ball mill for 12 hours, and filtered through a stainless mesh to obtain a coating solution.

### -Production of Endless Belt-

A cylindrical mold made of SUS, having an outer diameter of 430 mm and a length of 400 mm, is prepared, and a silicone-based mold release agent (SEPA-COAT SP, Shin-Etsu Chemical Co., Ltd.) is applied onto an outer peripheral surface of the mold, and dried.

The coating solution is applied onto the cylindrical mold while rotating the cylindrical mold that had been subjected to the release agent treatment in a circumferential direction. The coating film is dried in an air atmosphere at 140°C for 15 minutes. Furthermore, the coating film is placed in an oven at a reaching temperature of 320°C for 4 hours, and baked to obtain an endless belt. The endless belt is removed from the mold, and both ends are cut to obtain an intermediate transfer belt (1) having an inner diameter of 430 mm, a width of 369 mm, and a thickness of 70 µm.

### [Intermediate Transfer Belt (2) to (12)]

Each of intermediate transfer belts (2) to (12) is produced in the same manner as in the production of the intermediate transfer belt (1), except that the particle diameter and addition amount of the carbon black and/or the addition amount of the silicone oil are changed as shown in Table 1.

The carbon black and the silicone oil used for producing the intermediate transfer belt are the following commercially available products.
· Carbon black: number-average particle diameter of 11 nm, Colour Black FW255, Orion Engineered Carbons S.A.
· Carbon black: number-average particle diameter of 13 nm, Colour Black FW200, Orion Engineered Carbons S.A.
· Carbon black: number-average particle diameter of 17 nm, Special Black SB6, Orion Engineered Carbons S.A.
· Silicone oil: methylstyryl-modified silicone oil; KF-410, Shin-Etsu Chemical Co., Ltd.

### <Production of Cleaning Blade>

### [Cleaning Blade (1)]

### -Formation of First Polyurethane Layer-

A polyol obtained by polymerizing adipic acid and nonanediol at a molar ratio of 1:1 and carrying out a treatment to have an OH group at a terminal is used as a soft segment material. 4,4'-diphenylmethane diisocyanate (MILLIONATE MT, Nippon Polyurethane Industry Co., Ltd.), 1,4-butanediol (chain extender), and trimethylolpropane (crosslinking agent) are used as a hard segment material. Each material is mixed in the blending amount (molar ratio) shown in Table 2, and reacted at 70°C for 3 hours in a nitrogen atmosphere to obtain a composition for forming a first polyurethane layer. The composition for forming a first polyurethane layer is poured into a centrifugal molding machine, and subjected to a curing reaction to form a first polyurethane layer.

### -Formation of Second Polyurethane Layer-

A composition for forming a second polyurethane layer is obtained in the same manner as in the preparation of the composition for forming a first polyurethane layer, except that the blending amount (molar ratio) of each material is changed as shown in Table 2. The composition for forming a second polyurethane layer is poured into the centrifugal molding machine to be laminated on the first polyurethane layer, and subjected to a curing reaction to form a second polyurethane layer.

### -Surface Modification of Polyurethane Laminate-

A polyurethane laminate of the first polyurethane layer and the second polyurethane layer is cut into a size of 339 mm × 15 mm × a thickness of 2 mm, and one corner on the first polyurethane layer side is further cut at a tip angle of 98 degrees. Thereafter, the polyurethane laminate is immersed in a 4,4'-diphenylmethane diisocyanate bath at a liquid temperature of 55°C for 5 minutes, taken out from the bath, aged and heated, and dried at room temperature to obtain a cleaning blade (1).

### [Cleaning Blades (2) to (5)]

Each of cleaning blades (2) to (5) is produced in the same manner as in the production of the cleaning blade (1), except that the tip angle is changed as shown in Table 1.

### [Cleaning Blade (6)]

A cleaning blade (6) is produced in the same manner as in the production of the cleaning blade (1), except that the blending amount (molar ratio) of each material is changed as shown in Table 2.

### [Cleaning Blade (7)]

A cleaning blade (7) is produced in the same manner as in the production of the cleaning blade (1), except that the blending amount (molar ratio) of each material is changed as shown in Table 2.

### [Cleaning Blade (8)]

A cleaning blade (8) is produced in the same manner as in the production of the cleaning blade (1), except that the blending amount (molar ratio) of each material is changed as shown in Table 2.

### [Cleaning Blade (9)]

A cleaning blade (9) is produced in the same manner as in the production of the cleaning blade (1), except that the blending amount (molar ratio) of each material is changed as shown in Table 2.

### [Cleaning Blade (10)]

A cleaning blade (10) is produced in the same manner as in the production of the cleaning blade (1), except that the blending amount (molar ratio) of each material is changed as shown in Table 2.

### [Cleaning Blade (11)]

A cleaning blade (11) is produced in the same manner as in the production of the cleaning blade (1), except that the blending amount (molar ratio) of each material is changed as shown in Table 2.

### [Cleaning Blade (12)]

A cleaning blade (12) is produced in the same manner as in the production of the cleaning blade (1), except that the blending amount (molar ratio) of each material is changed as shown in Table 2 and the surface modification of the polyurethane laminate is not carried out.

### [Cleaning Blade (13)]

A cleaning blade (13) is produced in the same manner as in the production of the cleaning blade (1), except that the blending amount (molar ratio) of each material is changed as shown in Table 2.

### [Cleaning Blade (14)]

A cleaning blade (14) is produced in the same manner as in the production of the cleaning blade (1), except that the blending amount (molar ratio) of each material is changed as shown in Table 2.

### <Performance Evaluation>

One of the intermediate transfer belts (1) to (12) and one of the cleaning blades (1) to (14) are mounted on an image forming apparatus ApeosPro-C750 (FUJIFILM Business Innovation Corporation) in the combinations listed in Table 1. A pressing force of the cleaning blade against the intermediate transfer belt is set to 2.5 gf/mm, and a pressing angle is set to 10 degrees.

### [Slipping of Toner]

In an environment of a temperature of 10°C and a relative humidity of 40%, 500,000 sheets of a test image (black, full halftone image with an image density of 1%) are output to recycled paper (JD paper, Oji Paper Co., Ltd.) of A4 size. Next, in an environment of a temperature of 28°C and a relative humidity of 70%, 500,000 sheets of a test image (yellow, full halftone image with an image density of 30%) are output to (1) A4-sized thick paper (Ncolor, FUJIFILM Business Innovation Corporation) or (2) A4-sized embossed paper (Leathac 66, TAKEO CO., LTD.). The yellow test image is visually observed and classified as follows.

G1: no color streaks are observed at all.

G2: minor color streaks appear after 400,000 sheets, that is a level acceptable for practical use.

G3: minor color streaks appear after 300,000 sheets, that is a level acceptable for practical use.

G4: color streaks appear before 300,000 sheets or color streaks appear frequently after 300,000 sheets, that is a level not acceptable for practical use.

### [Lifting]

After performing the above (1), in an environment of a temperature of 28°C and a relative humidity of 70%, 50,000 sheets of a test image (black; a patch having an image density of 5% and an image area of 10% is disposed in the center) are output to A4-sized thick paper (Ncolor, FUJIFILM Business Innovation Corporation).

Abnormal torque and abnormal sound (so-called blade chattering) of the cleaning blade occurring during the output of the patch image are classified as follows.
A: there is no stop due to the abnormal torque up to 50,000 sheets, and there is no abnormal sound even in a case where a front panel is removed.
B: there is no stop due to the abnormal torque up to 50,000 sheets, but there is slight abnormal sound in a case where a front panel is removed.
C: there is no stop due to the abnormal torque up to 50,000 sheets, but there is abnormal sound in a case where a front panel is mounted.
D: stopped due to the abnormal torque after 40,000 sheets.

**[Table 1]**

| | Intermediate transfer member | | | | | | Cleaning blade | | | | | | | Image quality | | |
|---|---|---|---|---|---|---|---|---|---|---|---|---|---|---|---|---|
| | Number | Surface layer | | | | Surface resistivity | Number | Tip angle | Hardness | | | | | Slipping (1) | Slipping (2) | Lifting |
| | | Carbon black | | Silicone oil | Silicon element concentration | | | | Tip | Depth of 100 µm | Back surface | H1 > H2 > H3 | H1/H3 | | | |
| | | Particle diameter | Addition amount with respect to 100 parts of resin | Addition amount with respect to 100 parts of resin | | | | | H1 | H2 | H3 | | | | | |
| | - | nm | Part by mass | Part by mass | atm% | logΩ/□ | - | Degree | Degree | Degree | Degree | - | Degree | - | | |
| Comparative Example 1 | (2) | 13 | 4 | 1.0 | 0.4 | 10.5 | (1) | 98 | 90 | 88 | 80 | Yes | 1.13 | G4 | G4 | C |
| Example 2 | (3) | 13 | 4 | 1.5 | 0.5 | 10.5 | (1) | 98 | 90 | 88 | 80 | Yes | 1.13 | G3 | G3 | B |
| Example 3 | (4) | 13 | 4 | 2.8 | 0.9 | 10.8 | (1) | 98 | 90 | 88 | 80 | Yes | 1.13 | G2 | G3 | B |
| Example 4 | (5) | 13 | 4 | 3.0 | 1.0 | 11.0 | (1) | 98 | 90 | 88 | 80 | Yes | 1.13 | G2 | G2 | A |
| Example 1 | (1) | 13 | 4 | 5.5 | 3.0 | 11.0 | (1) | 98 | 90 | 88 | 80 | Yes | 1.13 | G1 | G1 | A |
| Example 5 | (6) | 13 | 4 | 6.5 | 5.0 | 11.2 | (1) | 98 | 90 | 88 | 80 | Yes | 1.13 | G2 | G2 | A |
| Example 6 | (7) | 13 | 4 | 7.0 | 5.2 | 11.2 | (1) | 98 | 90 | 88 | 80 | Yes | 1.13 | G2 | G3 | A |
| Example 7 | (8) | 13 | 4 | 9.0 | 10.0 | 11.4 | (1) | 98 | 90 | 88 | 80 | Yes | 1.13 | G3 | G3 | A |
| Comparative Example 2 | (1) | 13 | 4 | 5.5 | 3.0 | 11.0 | (2) | 94 | 90 | 88 | 80 | Yes | 1.13 | G3 | G4 | B |
| Example 8 | (1) | 13 | 4 | 5.5 | 3.0 | 11.0 | (3) | 95 | 90 | 88 | 80 | Yes | 1.13 | G2 | G3 | A |
| Example 9 | (1) | 13 | 4 | 5.5 | 3.0 | 11.0 | (4) | 110 | 90 | 88 | 80 | Yes | 1.13 | G3 | G3 | A |
| Comparative Example 3 | (1) | 13 | 4 | 5.5 | 3.0 | 11.0 | (5) | 111 | 90 | 88 | 80 | Yes | 1.13 | G4 | G4 | B |
| Comparative Example 4 | (1) | 13 | 4 | 5.5 | 3.0 | 11.0 | (6) | 98 | 85 | 83 | 80 | Yes | 1.06 | G3 | G4 | A |
| Example 10 | (1) | 13 | 4 | 5.5 | 3.0 | 11.0 | (7) | 98 | 86 | 85 | 80 | Yes | 1.08 | G3 | G3 | A |
| Example 11 | (1) | 13 | 4 | 5.5 | 3.0 | 11.0 | (8) | 98 | 96 | 94 | 80 | Yes | 1.20 | G2 | G2 | C |
| Comparative Example 5 | (1) | 13 | 4 | 5.5 | 3.0 | 11.0 | (9) | 98 | 97 | 95 | 80 | Yes | 1.21 | G3 | G4 | D |
| Example 12 | (1) | 13 | 4 | 5.5 | 3.0 | 11.0 | (10) | 98 | 90 | 88 | 85 | Yes | 1.06 | G2 | G3 | A |
| Example 13 | (1) | 13 | 4 | 5.5 | 3.0 | 11.0 | (11) | 98 | 88 | 86 | 80 | Yes | 1.10 | G2 | G2 | A |
| Example 14 | (1) | 13 | 4 | 5.5 | 3.0 | 11.0 | (12) | 98 | 88 | 88 | 80 | No | 1.10 | G3 | G3 | A |
| Example 15 | (1) | 13 | 4 | 5.5 | 3.0 | 11.0 | (13) | 98 | 96 | 94 | 75 | Yes | 1.28 | G2 | G2 | B |
| Example 16 | (1) | 13 | 4 | 5.5 | 3.0 | 11.0 | (14) | 98 | 96 | 94 | 73 | Yes | 1.32 | G2 | G3 | C |
| Example 17 | (9) | 13 | 4.8 | 5.8 | 3.0 | 8.8 | (1) | 98 | 90 | 88 | 80 | Yes | 1.13 | G1 | G3 | A |
| Example 18 | (10) | 11 | 4 | 5.5 | 3.0 | 9.0 | (1) | 98 | 90 | 88 | 80 | Yes | 1.13 | G1 | G2 | A |
| Example 19 | (11) | 13 | 3.6 | 5.3 | 3.0 | 12.0 | (1) | 98 | 90 | 88 | 80 | Yes | 1.13 | G1 | G2 | A |
| Example 20 | (12) | 17 | 4 | 5.5 | 3.0 | 12.1 | (1) | 98 | 90 | 88 | 80 | Yes | 1.13 | G1 | G3 | A |

**[Table 2]**

| Cleaning blade | First polyurethane layer | | | | | | | | |
|---|---|---|---|---|---|---|---|---|---|
| | Polyol | | | Chain extender | | Polyisocyanate | | Crosslinking agent | |
| Number | Material | Molar ratio | Blending amount | Material | Blending amount | Material | Blending amount | Material | Blending amount |
| (1) to (5) | Adipic acid, nonanediol | 1:1 | 63 | Butanediol | 8 | MDI | 28 | Trimethylolpropane | 1 |
| (6) | Adipic acid, nonanediol | 1:1 | 67 | Butanediol | 6 | MDI | 26 | Trimethylolpropane | 1 |
| (7) | Adipic acid, nonanediol | 1:1 | 65 | Butanediol | 6 | MDI | 28 | Trimethylolpropane | 1 |
| (8) | Adipic acid, nonanediol | 1:1 | 58 | Butanediol | 9.8 | MDI | 31 | Trimethylolpropane | 1.2 |
| (9) | Adipic acid, nonanediol | 1:1 | 57 | Butanediol | 10.7 | MDI | 31 | Trimethylolpropane | 1.3 |
| (10) | Adipic acid, nonanediol | 1:1 | 63 | Butanediol | 8 | MDI | 28 | Trimethylolpropane | 1 |
| (11) | Adipic acid, nonanediol | 1:1 | 64 | Butanediol | 7 | MDI | 28 | Trimethylolpropane | 1 |
| (12) | Adipic acid, nonanediol | 1:1 | 63 | Butanediol | 8 | MDI | 28 | Trimethylolpropane | 1 |
| (13) | Adipic acid, nonanediol | 1:1 | 58 | Butanediol | 9.8 | MDI | 31 | Trimethylolpropane | 1.2 |
| (14) | Adipic acid, nonanediol | 1:1 | 58 | Butanediol | 9.8 | MDI | 31 | Trimethylolpropane | 1.2 |

| Cleaning blade | Second polyurethane layer | | | | | | | | |
|---|---|---|---|---|---|---|---|---|---|
| | Polyol | | | Chain extender | | Polyisocyanate | | Crosslinking agent | |
| Number | Material | Molar ratio | Blending amount | Material | Blending amount | Material | Blending amount | Material | Blending amount |
| (1) to (5) | Adipic acid, nonanediol | 1:1 | 70 | Butanediol | 6.2 | MDI | 23 | Trimethylolpropane | 0.8 |
| (6) | Adipic acid, nonanediol | 1:1 | 70 | Butanediol | 6.2 | MDI | 23 | Trimethylolpropane | 0.8 |
| (7) | Adipic acid, nonanediol | 1:1 | 70 | Butanediol | 6.2 | MDI | 23 | Trimethylolpropane | 0.8 |
| (8) | Adipic acid, nonanediol | 1:1 | 70 | Butanediol | 6.2 | MDI | 23 | Trimethylolpropane | 0.8 |
| (9) | Adipic acid, nonanediol | 1:1 | 70 | Butanediol | 6.2 | MDI | 23 | Trimethylolpropane | 0.8 |
| (10) | Adipic acid, nonanediol | 1:1 | 65 | Butanediol | 6 | MDI | 28 | Trimethylolpropane | 1 |
| (11) | Adipic acid, nonanediol | 1:1 | 70 | Butanediol | 6.2 | MDI | 23 | Trimethylolpropane | 0.8 |
| (12) | Adipic acid, nonanediol | 1:1 | 69 | Butanediol | 6 | MDI | 24 | Trimethylolpropane | 1 |
| (13) | Adipic acid, nonanediol | 1:1 | 74 | Butanediol | 4.5 | MDI | 21 | Trimethylolpropane | 0.5 |
| (14) | Adipic acid, nonanediol | 1:1 | 76 | Butanediol | 4 | MDI | 20 | Trimethylolpropane | 0.5 |

The image forming apparatus according to the present disclosure includes the following aspects.

### (Supplementary Note)

(((1))) An image forming apparatus comprising:
   a photoreceptor;
   a charging device that charges a surface of the photoreceptor;
   an electrostatic charge image forming device that forms an electrostatic charge image on a charged surface of the photoreceptor;
   a developing device that develops the electrostatic charge image formed on the surface of the photoreceptor with a developer containing a toner to form a toner image;
   an intermediate transfer member to which the toner image formed on the surface of the photoreceptor is transferred;
   a primary transfer device that transfers the toner image formed on the surface of the photoreceptor to a surface of the intermediate transfer member;
   a secondary transfer device that transfers the toner image transferred to the surface of the intermediate transfer member to a surface of a recording medium; and
   an intermediate transfer member cleaning device that has a cleaning blade coming into contact with the surface of the intermediate transfer member and cleans the surface of the intermediate transfer member,
   wherein the intermediate transfer member has a surface layer containing a resin, a conductive agent, and a silicone oil, a silicon element concentration on a surface of the surface layer is 0.5 atm% or more and 10.0 atm% or less,
   a tip angle of the cleaning blade is 95 degrees or more and 110 degrees or less, and
   a tip hardness of the cleaning blade is 86 degrees or more and 96 degrees or less.
(((2))) The image forming apparatus according to (((1))),
   wherein, in a case where the tip hardness of the cleaning blade is denoted by H1,
      a hardness of the cleaning blade at a position of a depth of 100 µm from a surface of the cleaning blade facing the intermediate transfer member is denoted by H2, and
      a hardness of the cleaning blade in a surface opposite to the surface facing the intermediate transfer member is denoted by H3,
   H1 > H2 > H3 and 1.1 ≤ H1/H3 < 1.3 are satisfied.
(((3))) The image forming apparatus according to (((1))) or (((2))),
   wherein the silicon element concentration on the surface of the surface layer in the intermediate transfer member is 1.0 atm% or more and 5.0 atm% or less.
(((4))) The image forming apparatus according to any one of (((1))) to (((3))),
   wherein a surface resistivity of the intermediate transfer member is 9.0 logΩ/□ or more and 12.0 logQ/o or less.
(((5))) The image forming apparatus according to any one of (((1))) to (((4))),
   wherein the cleaning blade is a laminate of a first polyurethane layer constituting a surface facing the intermediate transfer member and a second polyurethane layer constituting a surface opposite to the surface facing the intermediate transfer member.

According to (((1))) or (((5))), there is provided an image forming apparatus in which toner is less likely to slip at a contact portion between an intermediate transfer member and a cleaning blade, as compared with an image forming apparatus in which the silicon element concentration on the surface of the surface layer in the intermediate transfer member is less than 0.5 atm%; an image forming apparatus in which toner is less likely to slip at a contact portion between an intermediate transfer member and a cleaning blade, as compared with an image forming apparatus in which the tip angle of the cleaning blade in the intermediate transfer member cleaning device is less than 95 degrees or more than 110 degrees; an image forming apparatus in which toner is less likely to slip at a contact portion between an intermediate transfer member and a cleaning blade, as compared with an image forming apparatus in which the tip hardness of the cleaning blade in the intermediate transfer member cleaning device is less than 86 degrees; and an image forming apparatus in which toner is less likely to slip at a contact portion between an intermediate transfer member and a cleaning blade and the cleaning blade is less likely to be lifted from the intermediate transfer member, as compared with an image forming apparatus in which the tip hardness of the cleaning blade in the intermediate transfer member cleaning device is more than 96 degrees.

According to (((2))), there is provided an image forming apparatus in which toner is less likely to slip at a contact portion between an intermediate transfer member and a cleaning blade, as compared with an image forming apparatus in which H1 > H2 > H3 is not satisfied; an image forming apparatus in which toner is less likely to slip at a contact portion between an intermediate transfer member and a cleaning blade, as compared with an image forming apparatus in which H1/H3 is less than 1.1; and an image forming apparatus in which toner is less likely to slip at a contact portion between an intermediate transfer member and a cleaning blade and the cleaning blade is less likely to be lifted from the intermediate transfer member, as compared with an image forming apparatus in which H1/H3 is 1.3 or less.

According to (((3))), there is provided an image forming apparatus in which toner is less likely to slip at a contact portion between an intermediate transfer member and a cleaning blade, as compared with an image forming apparatus in which the silicon element concentration on the surface of the surface layer in the intermediate transfer member is less than 1.0 atm% or more than 5.0 atm%.

According to (((4))), there is provided an image forming apparatus in which toner is less likely to slip at a contact portion between an intermediate transfer member and a cleaning blade, as compared with an image forming apparatus in which the surface resistivity of the intermediate transfer member is less than 9.0 logΩ/□ or more than 12.0 logΩ/□.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

60: cleaning blade
61: corner portion
62: surface
64: surface
1Y, 1M, 1C, 1K: photoreceptor
2Y, 2M, 2C, 2K: charging roll (example of charging device)
3: exposure device (example of electrostatic charge image forming device)
3Y, 3M, 3C, 3K: laser beam
4Y, 4M, 4C, 4K: developing device
5Y, 5M, 5C, 5K: primary transfer roll (example of primary transfer device)
6Y, 6M, 6C, 6K: photoreceptor cleaning device
8Y, 8M, 8C, 8K: toner cartridge
10Y, 10M, 10C, 10K: image forming unit
20: intermediate transfer belt (example of intermediate transfer member)
22: driving roll
24: support roll
26: secondary transfer roll (example of secondary transfer device)
28: fixing device
30: intermediate transfer member cleaning device
P: recording paper (an example of recording medium)
50: intermediate transfer member
52: surface layer

## Claims

1. An image forming apparatus comprising:
a photoreceptor;
a charging device that charges a surface of the photoreceptor;
an electrostatic charge image forming device that forms an electrostatic charge image on a charged surface of the photoreceptor;
a developing device that develops the electrostatic charge image formed on the surface of the photoreceptor with a developer containing a toner to form a toner image;
an intermediate transfer member to which the toner image formed on the surface of the photoreceptor is transferred;
a primary transfer device that transfers the toner image formed on the surface of the photoreceptor to a surface of the intermediate transfer member;
a secondary transfer device that transfers the toner image transferred to the surface of the intermediate transfer member to a surface of a recording medium; and
an intermediate transfer member cleaning device that has a cleaning blade coming into contact with the surface of the intermediate transfer member and cleans the surface of the intermediate transfer member,
wherein the intermediate transfer member has a surface layer containing a resin, a conductive agent, and a silicone oil, a silicon element concentration on a surface of the surface layer is 0.5 atm% or more and 10.0 atm% or less,
a tip angle of the cleaning blade is 95 degrees or more and 110 degrees or less, and
a tip hardness of the cleaning blade is 86 degrees or more and 96 degrees or less.

2. The image forming apparatus according to claim 1,
wherein, in a case where the tip hardness of the cleaning blade is denoted by H1,
a hardness of the cleaning blade at a position of a depth of 100 µm from a surface of the cleaning blade facing the intermediate transfer member is denoted by H2, and
a hardness of the cleaning blade in a surface opposite to the surface facing the intermediate transfer member is denoted by H3,
H1 > H2 > H3 and 1.1 ≤ H1/H3 < 1.3 are satisfied.

3. The image forming apparatus according to claim 1 or 2,
wherein the silicon element concentration on the surface of the surface layer in the intermediate transfer member is 1.0 atm% or more and 5.0 atm% or less.

4. The image forming apparatus according to any one of claims 1 to 3,
wherein a surface resistivity of the intermediate transfer member is 9.0 logΩ/□ or more and 12.0 logQ/o or less.

5. The image forming apparatus according to any one of claims 1 to 4,
wherein the cleaning blade is a laminate of a first polyurethane layer constituting a surface facing the intermediate transfer member and a second polyurethane layer constituting a surface opposite to the surface facing the intermediate transfer member.
